# EUROPEAN PATENT APPLICATION

(11) **EP 0 878 397 A1**
(43) Date of publication of application: **18.11.1998**
(21) Application number: 98106613.7
(22) Date of filing: 09.04.1998
(51) Int. Cl.: B65B 19/22

(54) **Cigarette packing machine with multiple wrapping lines**

(30) Priority: 14.04.1997 IT BO970221
(71) Applicant: G.D SOCIETA' PER AZIONI, I-40133 Bologna (IT)
(72) Inventor: Belvederi, Bruno, 40050 S. Martino di Monte S. Pietro (IT)
(74) Representative: Jorio, Paolo

(57) **Abstract**

A cigarette packing machine having a number of adjacent, side by side wrapping lines (3), and the same number of forming and transfer devices (5) for forming and transferring groups (6) of cigarettes (2) and each supplying a respective wrapping line (3); the forming and transfer devices (5) form the respective groups (6) by successively superimposing layers (10) of cigarettes (2), and successively feed the groups (6) so formed to a single transfer station (7) from which all the wrapping lines (3) extend.

## Description

The present invention relates to a cigarette packing machine with multiple wrapping lines.

In the following description, reference is made, purely by way of example, to a dual machine, i.e. a cigarette packing machine with two wrapping lines, wherein the wrapping lines are supported by a single frame and arranged side by side and adjacent to each other.

Moreover, in the following description, the term "group of cigarettes" is intended to mean the group of cigarettes forming the content of a packet and arranged in the same way as in the finished packet, that is, in a number of superimposed layers, each comprising a given number of cigarettes.

Using a dual machine as opposed to two single machines, i.e. packing machines with one wrapping line, is normally justified by a reduction in the overall size of the machine and, more particularly, by enabling certain supporting elements and/or actuating devices to be shared by the two wrapping lines, thus reducing manufacturing cost.

The output, however, of known dual machines - wherein, for each operating cycle, a forming and transfer device supplies a group of cigarettes to each of the two wrapping lines - is normally inferior to the total output of the two single machines.

On a dual machine, the two groups of cigarettes are formed simultaneously by superimposing, for each, three successive layers of cigarettes, which are extracted from a hopper - normally having six outlets equally spaced along a group forming path - and are fed into respective pockets of a step-operated conveyor.

The six outlets are associated alternately with the two wrapping lines, and define three pairs of adjacent outlets, in which each outlet in each pair supplies a respective layer defining one of the three layers defining a group of cigarettes. The pockets on the conveyor are equally spaced with a spacing equal to that of the six outlets and to half the operating step of the conveyor.

At each operating step of the conveyor, a pair of adjacent pockets is arrested in front of a respective pair of outlets to receive respective layers of cigarettes, so that each group is formed inside the respective pocket in three successive stops. At yet another stop at a transfer station, the groups formed in the pair of adjacent pockets are fed to the input of the respective wrapping lines.

The forming and transfer device of the dual machine described therefore produces two groups of cigarettes per operating cycle, which, however, for a given traveling speed of the pocket conveyor, is longer than the operating cycle of the corresponding forming and transfer device of a single machine. The forming and transfer device of a single machine, in fact, is supplied by a hopper with three outlets, each for a respective layer, and has a conveyor with pockets equally spaced with the same spacing as the hopper outlets, and which travels in steps equal to half the step of the corresponding dual machine conveyor.

One way of shortening the dual machine operating cycle is to accelerate the operating step of the conveyor. Over a given limit, however, the sharp acceleration and deceleration to which the conveyor would be subjected may result in serious mechanical damage to the conveyor and the conveyor supporting elements.

Another way of shortening the operating cycle is to reduce the length of each stop between two successive operating steps of the conveyor. In this case, however, reducing the stop below a given limit does not allow enough time for the component cigarettes in each layer to be fed by force of gravity to the respective outlets of the hopper.

It is an object of the present invention to provide a cigarette packing machine with multiple wrapping lines, which provides for rapidly and effectively forming and transferring groups of cigarettes to the respective wrapping lines.

According to the present invention, there is provided a cigarette packing machine with multiple wrapping lines, the machine comprising at least two wrapping lines; supporting means for supporting said wrapping lines side by side and adjacent to each other; forming and transfer means for forming groups of cigarettes and transferring the groups to said wrapping lines at a single transfer station; and supply means for supplying cigarettes to said forming and transfer means; the machine being characterized in that said forming and transfer means comprise, for each said wrapping line, a forming and transfer device for forming and transferring groups of cigarettes and associated with the wrapping line; each forming and transfer device comprising respective conveying means with pockets, for forming a said group inside each pocket by successively superimposing layers of cigarettes, and for feeding the respective groups in steps along a respective given path; said paths converging towards said transfer station.

According to a preferred embodiment of the above machine, said conveying means associated with said wrapping lines are synchronized with each other.

A number of non-limiting embodiments of the present invention will be described by way of example with reference to the accompanying drawings, in which:
Figure 1 shows a schematic side view, with parts removed for clarity, of a portion of a first embodiment of the packing machine according to the present invention;
Figure 2 shows a plan view of the Figure 1 machine portion;
Figure 3 shows a schematic side view, with parts removed for clarity, of a portion of a second embodiment of the packing machine according to the present invention;
Figure 4 shows a plan view of the Figure 3 machine portion.

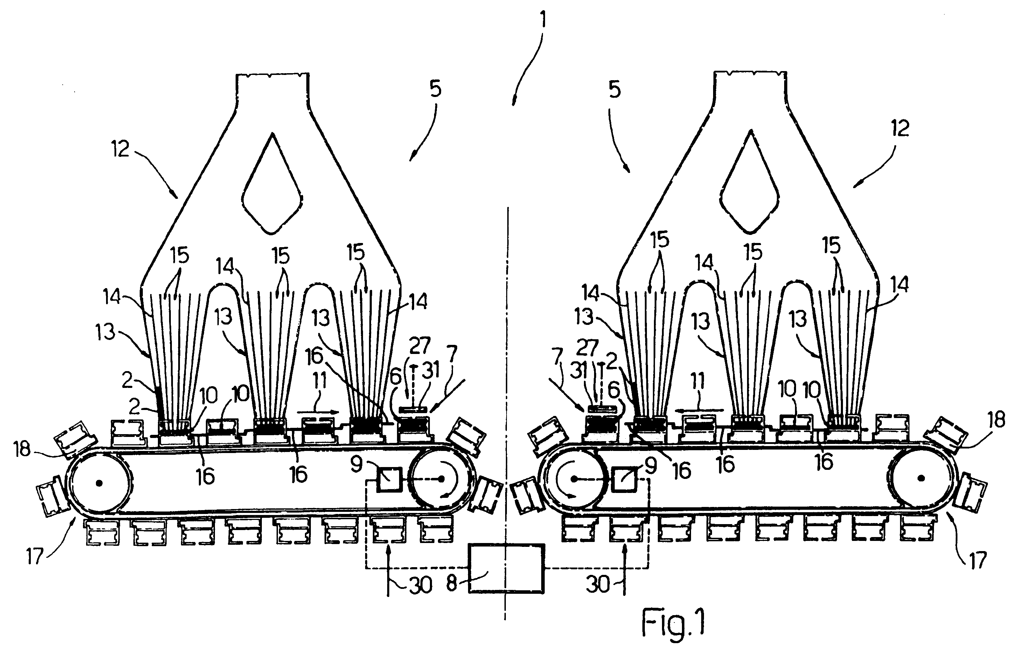

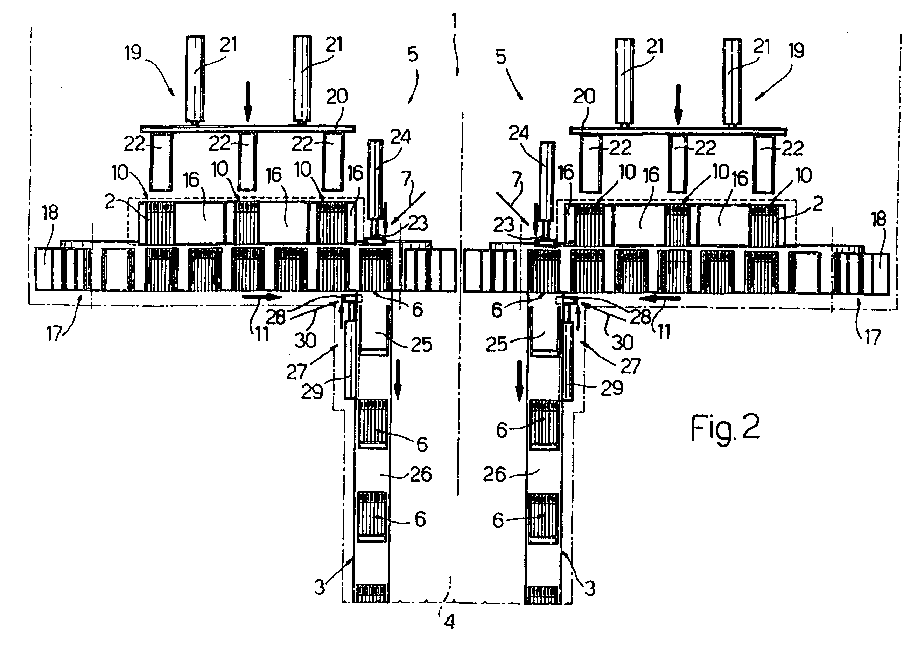

Number 1 in Figures 1 and 2 indicates as a whole a packing machine for packing cigarettes 2 and having two wrapping lines 3 adjacent and substantially parallel to each other and supported by a frame 4 of machine 1.

Machine 1 also comprises a first and a second device 5 for forming and transferring groups 6 of cigarettes 2.

Each device 5 is associated with a respective wrapping line 3, and supplies respective groups 6 to respective wrapping line 3 at a single transfer station 7 from which lines 3 extend. Both devices 5 are fitted to frame 4 on either side of station 7, and are preferably operated by a single motor 8 via respective clutch assemblies 9, which may be operated selectively to deactivate devices 5 independently of each other. Devices 5 operate in time with each other to simultaneously form respective groups 6 by successively superimposing three respective layers 10 of cigarettes 2, and to successively feed the groups 6 so formed along two respective given paths 11 converging towards station 7.

Machine 1 also comprises two hoppers 12 containing cigarettes 2, and each of which supplies a respective device 5, and has a bottom output end portion defined by three outlets 13.

The three outlets 13 of each hopper 12 are equally spaced along respective path 11, taper downwards, and are each divided by inner partitions 14 into a number of channels 15, each of which is of a width slightly larger than the diameter of cigarettes 2 to feed cigarettes 2 towards respective path 11. Each of the three outlets 13 supplies a respective layer 10 of the three layers 10 defining a group 6, and comprises a number of channels 15 equal to the number of cigarettes 2 in respective layer 10.

A respective plate 16 of respective device 5 is located beneath each outlet 13, at a distance from outlet 13 slightly greater than the diameter of cigarettes 2. Cigarettes 2 are formed by force of gravity into a column inside each channel 15, and the bottom cigarette 2 in each column is positioned contacting plate 16. In known manner not shown, the three plates 16 of each device 5 are arranged along respective path 11 at increasing levels differing by an amount substantially equal to the diameter of cigarettes 2. Each device 5 also comprises a respective endless belt conveyor 17, the top branch of which extends along respective path 11. The two conveyors 17 are driven in opposite directions by motor 8, and each conveyor 17 supports a number of pockets 18 equally spaced along conveyor 17 with a spacing equal to half the spacing of outlets 13, and each for containing a group 6 of cigarettes 2. Pockets 18 extend crosswise to respective path 11, so that, for each complete turn of respective conveyor 17, each pocket 18 traveling beneath respective hopper 12 is arrested successively in front of the three plates 16, with an input end of the pocket facing plates 16, to successively receive the three layers 10 of cigarettes 2.

At each stop of respective conveyor 17, each layer 10 is fed into respective pocket 18 of conveyor 17 by a pusher 19, which comprises a crosspiece 20 moved back and forth by actuators 21 in a horizontal direction perpendicular to respective path 11, and three push plates 22 connected rigidly to crosspiece 20 to move simultaneously between a withdrawn rest position on the opposite side of hopper 12 to conveyor 17, and a work position in which each plate 22 engages the gap between the bottom end of respective outlet 13 and respective plate 16.

Each device 5 also comprises a further pusher 23 located at station 7, and which is moved back and forth, by an actuator 24 and in a horizontal direction perpendicular to respective path 11 and coaxial with respective line 3, between a withdrawn rest position on the opposite side of station 7 to respective line 3, and a work position in which, at each stop of respective conveyor 17, pusher 23 engages the inside of a respective pocket 18 to transfer a group 6 into a pocket 25 of a linear belt conveyor 26 extending from transfer station 7 in a direction crosswise to respective path 11, and defining an input element of respective wrapping line 3.

Each device 5 also comprises a reject unit 27 in turn comprising a further pusher 28, which has a respective actuator 29 and is located at a reject station 30 downstream from station 7 in the traveling direction of conveyor 17. Unit 27 also comprises a control sensor 31 located at station 7 or, preferably, according to a variation not shown, between station 7 and hopper 12. Sensor 31 provides for detecting groups 6 and, in the event of a faulty group 6, disables operation of actuator 24 as the faulty group 6 travels through station 7, and, as the faulty group 6 is arrested at reject station 30, activates actuator 29 to move pusher 28 from a withdrawn rest position outside the pocket 18 containing the faulty group 6, into a forward work position in which pusher 28 extends through pocket 18 to unload the faulty group 6.

Each pair of adjacent outlets 13 of machine 1 define, along respective path 11, a gap of a length approximately equal to but no smaller than the width of a pocket 18; and pockets 18 move forward in steps equal to the spacing of pockets 18 and to half the spacing of outlets 13, thus minimizing the traveling step of pockets 18 and so minimizing the operating cycle without incurring the problems described in connection with the known state of the art.

In actual use, at each step, each conveyor 17 arrests a pocket 18 at a first outlet 13 to receive a first layer 10 of cigarettes 2. At the next step, said pocket 18 is fed into a neutral position between two adjacent outlets 13, while the following adjacent pocket 18 receives a respective first layer 10 of cigarettes 2 from the first outlet 13. In the course of the next two steps, said two pockets 18 successively receive respective second layers 10 of cigarettes 2 from a second of outlets 13; and, in the course of a further two steps of respective conveyor 17, said two pockets 18 successively receive respective third layers 10 of cigarettes 2 from a third of outlets 13 to complete the respective groups 6.

If the two conveyors 17 are synchronized with each other, two respective pockets 18 containing respective complete groups 6 are fed simultaneously to transfer station 7, where respective pushers 23 simultaneously load respective groups 6 of cigarettes 2 into respective pockets 25 of respective wrapping lines 3.

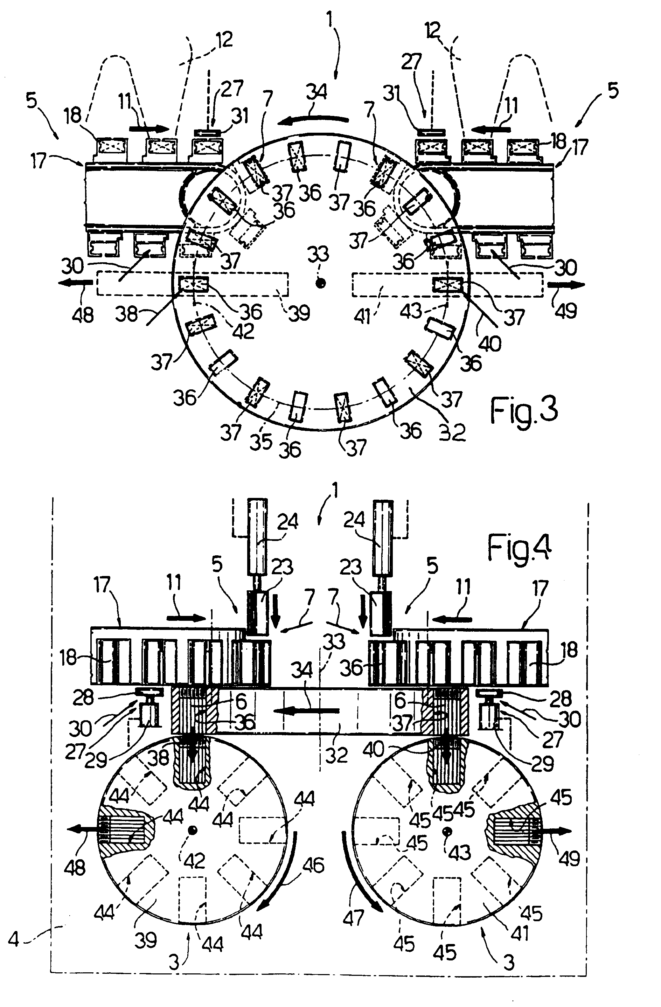

A variation of the packing machine described above is shown in Figures 3 and 4, in which the parts described with reference to Figures 1 and 2 are indicated using the same numbering system.

As opposed to conveyors 26 in Figures 1 and 2, machine 1 in Figures 3 and 4 comprises, at station 7, a conveying wheel 32, which is associated with both forming and transfer devices 5, defines a common input element of the two wrapping lines 3, and is located on the opposite side of conveyors 17 to pushers 23.

Wheel 32 rotates in steps about a respective horizontal axis 33 beneath and at the same distance from the two conveyors 17, and is operated intermittently (by drive devices not shown) to rotate, anticlockwise in Figure 3, in given steps and in a given direction 34 about axis 33. Wheel 32 comprises a succession of alternating even and odd pockets, respectively indicated 36 and 37, which are equally spaced along a circumference 35 coaxial with axis 33, and each have a substantially rectangular section for housing a respective group 6. In particular, the angular step of wheel 32 is equal to the angle between each pair of adjacent pockets 36 or 37.

The location of axis 33 and the length of the radius of wheel 32 are such that, at the end of each step of wheel 32, a pocket 36 is positioned, in station 7, coaxial with a respective pocket 18 of one of conveyors 17, and a pocket 37 is positioned, in station 7, coaxial with a respective pocket 18 of the other conveyor 17.

Each pocket 36 feeds a respective group 6 in steps from station 7 to a transfer station 38 where group 6 is transferred to a further conveying wheel 39 of a first of the two wrapping lines 3. Similarly, each pocket 37 feeds a respective group 6 from station 7 to a transfer station 40 where group 6 is transferred to a further conveying wheel 41 of a second of the two wrapping lines 3.

Wheels 39 and 41 define the input wheels of respective lines 3, which, in machine 1 in Figures 3 and 4, are defined by a succession of wheels not shown. Wheels 39 and 41 are mounted to rotate in steps about respective vertical axes 42 and 43, and comprise respective numbers of peripheral pockets 44 and 45 equally spaced about respective axes 42 and 43 and each for housing a respective group 6. Wheels 39 and 41 are operated intermittently, in time with each other and with wheel 32, to feed respective pockets 44 and 45 along two respective paths 46 and 47 to respective transfer stations 48 and 49 where respective groups 6 are transferred to successive wheels (not shown) of respective wrapping lines 3.

In actual use, at each stop of conveyors 17, the two pushers 23 simultaneously load two groups 6 of cigarettes 2, one into a pocket 36 and the other into a pocket 37 arrested at station 7. As wheel 32 rotates, the two loaded groups 6 are fed in steps to respective stations 38 and 40, at each of which, a push device (not shown) transfers the respective group 6 into a respective pocket 44, 45 of respective wheel 39, 41 during a combined stop of wheels 39 and 41. Finally, wheels 39 and 41 feed the respective groups 6 in steps and in time with each other to stations 48 and 49 of respective wrapping lines 3.

## Claims

1. A cigarette packing machine with multiple wrapping lines, the machine (1) comprising at least two wrapping lines (3); supporting means (4) for supporting said wrapping lines (3) side by side and adjacent to each other; forming and transfer means for forming groups (6) of cigarettes (2) and transferring the groups (6) to said wrapping lines (3) at a single transfer station (7); and supply means (12) for supplying cigarettes (2) to said forming and transfer means; the machine (1) being characterized in that said forming and transfer means comprise, for each said wrapping line (3), a forming and transfer device (5) for forming and transferring groups (6) of cigarettes (2) and associated with the wrapping line (3); each forming and transfer device (5) comprising respective conveying means (17) with pockets, for forming a said group (6) inside each pocket (18) by successively superimposing layers (10) of cigarettes (2), and for feeding the respective groups (6) in steps along a respective given path (11); said paths (11) converging towards said transfer station (7).

2. A machine as claimed in Claim 1, characterized in that said conveying means (17) associated with said wrapping lines (3) are timed with respect to each other.

3. A machine as claimed in Claim 1 or 2, characterized in that said conveying means (17) comprise, for each forming and transfer device (5), an endless conveyor (17) having said pockets (18), and activating means (8, 9) for moving said conveyors (17) in opposite directions; said activating means (8, 9) being selectively connectable to the conveyors (17).

4. A machine as claimed in Claim 3, characterized in that said activating means (8, 9) feed the pockets (18) of each said forming and transfer device (5) along the respective said path (11) in steps equal to a first spacing of said pockets (18) along the path (11).

5. A machine as claimed in Claim 3 or 4, characterized by comprising, for each said forming and transfer device (5), rejecting means (27) for rejecting any faulty groups (6); said rejecting means (27) comprising a sensor (31) located at or upstream from the transfer station (7), and a first unloading pusher (28) cooperating with the respective said conveyor (17) at a reject station (30) downstream from said transfer station (7); each said forming and transfer device (5) comprising a second transfer pusher (23) at said transfer station (7); and said sensor (31) disabling operation of said second transfer pusher (23) as a faulty group (6) travels through the transfer station (7).

6. A machine as claimed in any one of the foregoing Claims, characterized in that said supply means (12) for supplying cigarettes (2) to each said forming and transfer device (5) comprise a hopper (12) having a number of outlets (13) equal to the number of said layers (10) in each said group (6); said outlets (13) being spaced along the respective said path (11) with a second spacing of a length equal to twice the length of a first spacing of said pockets (18) along the path (11).

7. A machine as claimed in Claim 6, characterized in that the outlets (13) in each pair of adjacent said outlets (13) define, along said path (11), a gap of a length approximately equal to but no smaller than the width of a said pocket (18).

8. A machine as claimed in any one of the foregoing Claims, characterized in that each said wrapping line (3) comprises a linear input conveyor (26) extending from said transfer station (7) in a direction crosswise to the respective said path (11).

9. A machine as claimed in any one of the foregoing Claims from 1 to 7, characterized by also comprising a first conveyor (32) extending through said transfer station (7); said first conveyor (32) having pockets (36, 37) for receiving respective said groups (6), and being a conveyor rotating in steps about an axis (33) crosswise to said paths (11) to position, at each step, two pockets (36, 37) at said transfer station (7) and in line with respective pockets (18) of said two forming and transfer devices (5); said first conveyor (32) defining a common input element of said two wrapping lines (3).

10. A machine as claimed in Claim 9, characterized by comprising a pair of second conveyors (39, 41), each associated with a respective wrapping line (3); said second conveyors (39, 41) being rotary conveyors movable in steps and in time with said first conveyor (32) to receive respective groups (6) of cigarettes (2) from the first conveyor (32).
